# EUROPÄISCHE PATENTSCHRIFT

(11) **EP 0 891 855 B1**
(45) Veröffentlichungstag und Bekanntmachung des Hinweises auf die Patenterteilung: **18.12.2002**
(21) Anmeldenummer: 98890161.7
(22) Anmeldetag: 27.05.1998
(51) Int. Cl.: B29C 49/78, B29C 49/18

(54) **Verfahren und Vorrichtung zur Herstellung von hohlen Kunststoffbehältern**
Method and apparatus for manufacturing of hollow plastic containers
Procédé et dispositif pour la fabrication de récipients creux en matière plastique

(30) Priorität: 07.07.1997 AT 115997
(43) Veröffentlichungstag der Anmeldung: 20.01.1999
(73) Patentinhaber: HYGRAMA AG, 6300 Zug (CH)
(72) Erfinder: Frisch, Herbert, Ing., 1238 Wien (AT)
(74) Vertreter: Laminger, Norbert, Mag.

(56) Entgegenhaltungen:
- EP-A- 0 754 537
- US-A- 4 214 860
- US-A- 4 488 863
- US-A- 5 474 735

## Beschreibung

Die Erfindung betrifft ein Verfahren zur Herstellung von hohlen Behältern aus Kunststoff, insbesonders von Kunststoffflaschen aus PET, wobei ein vorgeformter Rohling in eine Blasform eingelegt und vorerst mittels einer beweglichen Lanze unter Einleitung eines gasförmigen Blasmediums mit einem ersten, niedrigen Druckniveau längsgedehnt wird, wonach der Behälter unter Einleitung eines gasförmigen Blasmediums mit einem zweiten, höheren Druckniveau fertig geformt wird, wobei das Blasmedium mit dem ersten Druckniveau der gleichen Druckquelle wie das Blasmedium mit dem zweiten Druckniveau entnommen wird. Weiters betrifft die Erfindung aber auch eine Vorrichtung zur Herstellung von hohlen Behältern aus Kunststoff, insbesonders von Kunststoffflaschen aus PET, mit einer Blasform und einer darin längs verschieblichen Lanze, welche über Druckleitungen in mittels Ventilen steuerbarer Aufeinanderfolge mit gasförmigem Blasmedium mit zwei unterschiedlichen Druckniveaus verbindbar ist, wobei eine einzige gemeinsame Druckquelle für beide Druckniveaus vorgesehen ist.

Bei bekannten Verfahren und Vorrichtungen der eingangs genannten Art zur Herstellung von Kunststoffflaschen ist es heutzutage üblich, einen vorgeformten bzw. vorgespritzten Rohling in die Blasform einzulegen, wonach mittels einer Lanze dieser Rohling in die Länge gedehnt wird, wobei diese Dehnung von einem unter niedrigerem Druck (etwa 10 bis 12 bar) eingeleiteten Blasmedium unterstützt wird. Sobald diese Längendehnung zumindest im wesentlichen abgeschlossen ist, wird auf Hochdruck-Blasmedium (ca. 40 bar) umgeschaltet und die jeweilige Flasche in der Blasform fertig ausgebildet. Dieser hohe Druck muß dann kurze Zeit gehalten werden, damit die gedehnte Kunststoffflasche auf Dauer ihre Form behält.

Als Nachteil der bekannten Vorrichtungen und Verfahren der genannten Art ist zu erwähnen, daß der Herstellungszyklus für eine einzelne Kunststoffflasche größenordnungsmäßig etwa vier bis fünf Sekunden dauert, wobei aber 10% dieser Zeit alleine für das Umschalten vom niedrigeren Druckniveau des Blasmediums beim Längsdehnen auf das höhere Druckniveau beim Fertigformen entfällt. Diese vorrichtungs- bzw. verfahrensmäßig bedingte Totzeit behindert natürlich von vornherein die an sich im Zusammenhang mit der Herstellung derartiger Massenartikel angestrebte Erhöhung der Arbeitsgeschwindigkeit.

Aus der DE 21 41 429 ist eine Vorrichtung bekannt, bei der die Blasmedienzufuhr durch eine einzige Leitung erfolgt und das Druckniveau durch unterschiedliche Öffnungsquerschnitte der Ausströmöffnungen aus der Lanze bei deren Auseinanderschieben bewirkt wird. Damit ist aber eine auf die Längsausdehnung der herzustellenden Gegenstandes verkoppelte Druckabfolge vorgegeben und diese Abfolge kann nicht bei Bedarf auch nur kurzfristig abgeändert oder auf momentane Bedürfnisse abgestimmt werden. Die US 4,214,860 wiederum zeigt das Entnehmen des Blasmediums beider Druckstufen aus einer Druckquelle und das Drosseln zur Druckreduzierung für das niedrigere Druckniveau. Die beiden Druckniveaus sind jedoch in einer fixen Abhängigkeit, was eine geringe Flexibilität der Druckregelung mit sich bringt, was beispielsweise auch durch die Steuerleitung zwischen den beiden Ventilen der bekannten Vorrichtung bewirkt ist.

Aufgabe der vorliegenden Erfindung ist es, Verfahren und Vorrichtung der eingangs genannten Art so zu verbessern, daß die beschriebenen Nachteile des Standes der Technik vermieden werden und daß insbesonders auf möglichst einfache Weise eine Erhöhung der Arbeitsgeschwindigkeit bzw. Verkürzung der Taktzeit bei der Herstellung der Kunststoffflaschen bei größtmöglicher Flexibilität der Drucksteuerung erreicht werden kann.

Diese Aufgabe wird gemäß der vorliegenden Erfindung bei einem Verfahren der eingangs genannten Art dadurch gelöst, daß für das niedrige Druckniveau die Menge an Blasmedium mit höherem Druckniveau durch Drosselung soweit reduziert wird, so dass durch die Expansion in den längsgedehnten Rohling das höhere zweite Druckniveau auf das niedrigere erste Druckniveau reduziert wird, und dass die Zufuhr des Blasmediums beider Druckniveaus zeitlich und steuerungstechnisch unabhängig voneinander regelbar ist und die Drosselung des höheren Druckniveaus auf das niedrigere Druckniveau nach der Freigabe der Zufuhr des Blasmediums erfolgt.

Die eingangs beschriebene Vorrichtung ist erfindungsgemäß zur Lösung der gestellten Aufgabe dadurch gekennzeichnet, dass für das niedrigere Druckniveau die Menge an Blasmedium des höheren Druckniveaus mittels einer in die zugehörige Druckleitung hinter dem zugehörigen Ventil eingeschalteten Drossel soweit reduziert wird, so dass durch die Expansion in den längsgedehnten Rohling das höhere zweite Druckniveau auf das niedrigere erste Druckniveau reduziert wird, und dass die beiden Ventile steuerungstechnisch voneinander unabhängig sind.

Dadurch, daß nun die beschriebene Druckunterstützung bei der anfänglichen Längsdehnung des Rohlings ebenfalls der Hochdruckquelle (typischerweise 40 bar) entnommen wird, kann man in die Vorrichtung erheblich vereinfachender Weise auf eine separate Niederdruckquelle (typischerweise 10 bis 12 bar) verzichten. Die Luftmenge aus der Hochdruckquelle wird für die anfängliche Niederdruck-Streckung bzw. Längsdehnung über eine Drossel so weit reduziert, daß durch Expansion in die Flasche während der anfänglichen Längsdehnung das Hochdruck-Niveau auf das notwendigere geringere Druckniveau reduziert wird. Durch die zwei separaten und parallelen Leitungen zur Zuführung des Blasmediums, in denen jeweils ein separat schaltbares Ventil vorhanden ist, kann unabhängig von der Längsausdehnung und der Länge der Lanze der Druck auf niedrigem oder hohem Niveau eingestellt werden. Dadurch ergibt sich eine größere Flexiblität im Verfahrensablauf und die Möglichkeit der kurz- oder längerfristigen Zuschaltung des höheren Drucks auch bereits während der Längsstreck-Phase bzw. des Zurücknehmens des Drucks auch während der Fertigformung mit der Möglichkeit, auf Störungen oder besondere Verhältnisse während der Längs- und Querstreckung flexibel zu reagieren. Nachdem normalerweise bei entsprechenden Anordnungen ohnedies einstellbare Drossel für den Ausgleich beispielsweise von Temperatureinflüssen vorhanden sind, bedeutet die beschriebene Methode nicht nur eine Reduzierung der Zykluszeit (durch den Wegfall des auf alle Fälle eine gewisse Zeit in Anspruch nehmenden Umschaltens zwischen verschiedenen Druckniveaus) sondern es kann auch auf sonst erforderlichen zusätzliche Einrichtungen verzichtet werden.

Gemäß einer bevorzugten Ausgestaltung der Erfindung ist vorgesehen, daß die Drossel zur Darstellung des niedrigeren Druckniveaus einstellbar ist, womit verschiedenen Anforderungen bzw. Umgebungsbedingungen oder dergleichen Rechnung getragen werden kann.

In einer besonders bevorzugten Ausgestaltung der erfindungsgemäßen Vorrichtung kann schließlich vorgesehen sein, daß die Ventile zur Steuerung der Aufeinanderfolge der Druckniveaus des Blasmediums von druckausgeglichenen, schnellschaltenden 2/2-Wege-Sitzventilen gebildet sind, wodurch die Reduzierung der Taktzeit bzw. Erhöhung der Arbeitsgeschwindigkeit optimiert werden kann.

In weiterer Ausgestaltung der Erfindung kann vorgesehen sein, daß die Ventile und vorzugsweise auch die Drossel, samt Verbindungsleitungen in einem gemeinsamen Gehäuse, vorzugsweise in unmittelbarer Nähe der Blasform, angeordnet sind. Damit ist die Konstruktion weiter vereinfacht, für möglichst geringes Volumen in den Verbindunsleitungen gesorgt und damit eine weitere Möglichkeit zur Verringerung der Taktzeiten gegeben.

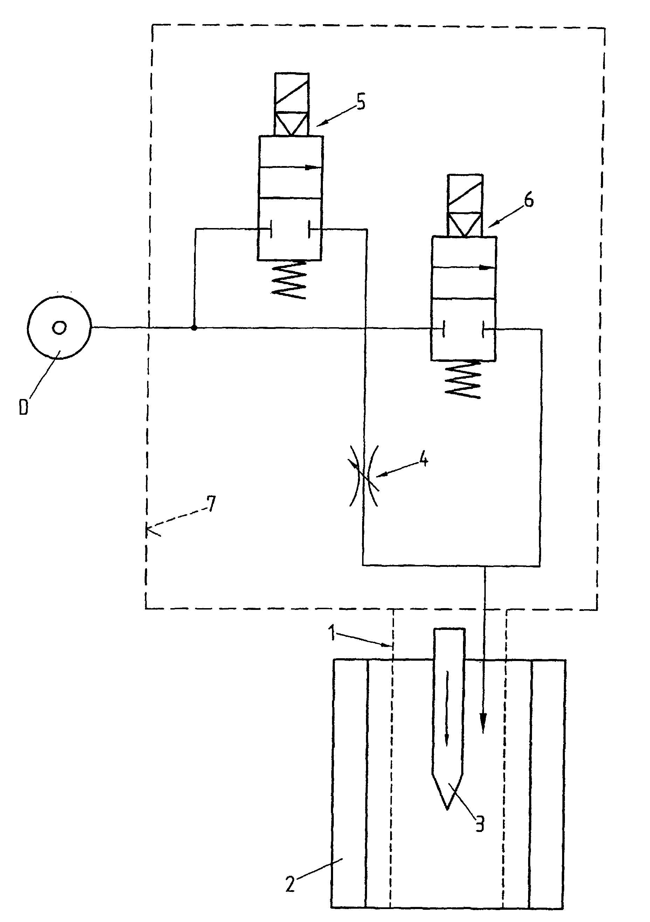

Die Erfindung wird im folgenden noch anhand des in der Zeichnung schematisch dargestellten Ausführungsbeispiels einer entsprechenden Vorrichtung näher erläutert.

Die Blasform für den nur strichliert eingezeichneten, vorgeformten Rohling 1 ist mit 2 bezeichnet und üblicherweise in einer hier nicht näher dargestellten Vorrichtung für die gleichzeitige Herstellung mehrer Kunststoffflaschen eingebaut, welche auch sonstige hier nicht interessierende Teile umfaßt. Zur Herstellung beispielsweise von PET-Flaschen nach der Blasformmethode wird der vorgefertigte Rohling 1 in die Blasform 2 eingelegt und vorerst mittels einer beweglichen Lanze 3 längsgedehnt (in der Darstellung nach unten gestreckt) wobei diese Längsdehnung durch Einleitung eines gasförmigen Blasmediums mit einem ersten, niedrigeren Druckniveau unterstützt wird. Erst danach wird der aus dem Rohling 1 entstehende Behälter unter Einleitung eines gasförmigen Blasmediums mit einem zweiten, höheren Druckniveau fertiggeformt.

Das Blasmedium mit dem ersten Druckniveau wird hier der gleichen, mit D bezeichneten Druckquelle wie das Blasmedium mit dem zweiten, höheren Druckniveau entnommen, wobei für das niedrigere Druckniveau die Luftmenge des höheren Druckniveaus durch Drosselung über eine einstellbare Drossel 4 so weit reduziert wird, daß durch die Expansion in den längsgedehnten Rohling 1 das höhere zweite Druckniveau auf das niedrigere erste Druckniveau reduziert wird.

Die Druckquelle D stellt hier Druckmedium mit einem dem zweiten, höheren Druckniveau entsprechenden Niveau von beispielsweise 40 bar zur Verfügung. Für die Einleitung des niedrigeren, ersten Druckniveaus (etwa 10 bis 12 bar) in den Rohling 1 wird das federbelastet in der dargestellten Schließstellung stehende Ventil 5 in die nicht dargestellte Durchlaßstellung gebracht, womit die Luftmenge des an sich höheren Druckniveaus durch Drosselung über die Drossel 4 so weit reduziert wird, daß durch die Expansion in den Rohling 1 das höhere Druckniveau (z.B. 40 bar) der Druckquelle D auf das niedrigere, erste Druckniveau (z.B. 12 bar) reduziert wird. Zur Umschaltung auf das zweite, höhere Druckniveau braucht nun hier lediglich das zweite Ventil 6 aus der dargestellten, federbelastet geschlossenen Stellung in die nicht dargestellte Durchlaßstellung geschaltet werden, wobei diese Umschaltung auch durchaus bei noch geöffnetem Ventil 5 erfolgen kann, da die beiden Ventile 5, 6 ohnedies eingangsseitig auf dem gleichen Druckniveau liegen. Die Umschaltzeit selbst kann damit praktisch eliminiert werden, womit eine Verkürzung der Taktzeit bzw. Erhöhung der Herstellgeschwindigkeit gegenüber den bisher üblichen Umschaltungen zwischen zwei separaten Druckniveaus möglich ist.

Die beiden Ventile 5, 6 sind bevorzugt von druckausgeglichenen, schnellschaltenden 2/2-Wege2/2-Wege-Sitzventilen gebildet und zusammen mit der Drossel 4 in einem strichliert angedeuteten gemeinsamen Gehäuse 7 in unmittelbarer Nähe der Blasform 2 angeordnet, womit die beschriebenen Vorteile der Anordnung noch unterstützt werden.

## Patentansprüche

1. Verfahren zur Herstellung von hohlen Behältern aus Kunststoff, insbesonders von Kunststoffflaschen aus PET, wobei ein vorgeformter Rohling (1) in eine Blasform (2) eingelegt und vorerst mittels einer beweglichen Lanze unter Einleitung eines gasförmigen Blasmediums mit einem ersten, niedrigen Druckniveau längsgedehnt wird, wonach der Behälter unter Einleitung eines gasförmigen Blasmediums mit einem zweiten, höheren Druckniveau fertig geformt wird, wobei das Blasmedium mit dem ersten Druckniveau der gleichen Druckquelle (D) wie das Blasmedium mit dem zweiten Druckniveau entnommen wird, **dadurch gekennzeichnet, dass** für das niedrige Druckniveau die Menge an Blasmedium mit höherem Druckniveau durch Drosselung soweit reduziert wird, so dass durch die Expansion in den längsgedehnten Rohling (1) das höhere zweite Druckniveau auf das niedrigere erste Druckniveau reduziert wird, und dass die Zufuhr des Blasmediums beider Druckniveaus zeitlich und steuerungstechnisch unabhängig voneinander regelbar ist und die Drosselung des höheren Druckniveaus auf das niedrigere Druckniveau nach der Freigabe der Zufuhr des Blasmediums erfolgt.

2. Vorrichtung zur Herstellung von hohlen Behältern aus Kunststoff, insbesonders von Kunststoffflaschen aus PET, mit einer Blasform (2) und einer darin längs verschieblichen Lanze (3), welche über Druckleitungen in mittels Ventilen (5, 6) steuerbarer Aufeinanderfolge mit gasförmigem Blasmedium mit zwei unterschiedlichen Druckniveaus verbindbar ist, wobei eine einzige gemeinsame Druckquelle (D) für beide Druckniveaus vorgesehen ist, **dadurch gekennzeichnet, dass** für das niedrigere Druckniveau die Menge an Blasmedium des höheren Druckniveaus mittels einer in die zugehörige Druckleitung hinter dem zugehörigen Ventil (5) eingeschalteten Drossel (4) soweit reduziert wird, so dass durch die Expansion in den längsgedehnten Rohling (1) das höhere zweite Druckniveau auf das niedrigere erste Druckniveau reduziert wird, und dass die beiden Ventile (5, 6) steuerungstechnisch voneinander unabhängig sind.

3. Vorrichtung nach Anspruch 2, **dadurch gekennzeichnet, dass** die Drossel (4) einstellbar ist.

4. Vorrichtung nach Anspruch 2 oder 3, **dadurch gekennzeichnet, daß** die Ventile (5,6) zur Steuerung der Aufeinanderfolge der Druckniveaus des Blasmediums von druckausgeglichenen, schnellschaltenden 2/2-Wege-Sitzventilen gebildet sind.

5. Vorrichtung nach einem oder mehreren der Ansprüche 2 bis 4, **dadurch gekennzeichnet, daß** die Ventile (5,6), und vorzugsweise auch die Drossel (4), samt Verbindungsleitungen in einem gemeinsamen Gehäuse (7), vorzugsweise in unmittelbarer Nähe der Blasform (2), angeordnet sind.

## Claims

1. A method of manufacturing hollow plastics containers, in particular plastics bottles made of PET, wherein a parison (1) is placed in a blowing mould (2) and first longitudinally extended by means of a movable lance during the introduction of a gaseous blowing medium at a first, low pressure level, after which the container is finally formed during the introduction of a gaseous blowing medium at a second, higher pressure level, wherein the blowing medium at the first pressure level is tapped from the same pressure source (D) as the blowing medium at the second pressure level, **characterised in that**, for the low pressure level, the quantity of blowing medium at the higher pressure level is reduced by throttling to such an extent that, owing to the expansion in the longitudinally extended parison (1), the higher second pressure level is reduced to the lower first pressure level, and **in that** the supply of blowing medium at the two pressure levels can be independently regulated from the point of view of both time and control engineering, and the higher pressure level is throttled to the lower pressure level after the supply of blowing medium has been released.

2. A device for manufacturing hollow plastics containers, in particular plastics bottles made of PET, comprising a blowing mould (2) and a lance (3) longitudinally displaceable therein and connectable to a gaseous blowing medium at two different pressure levels via pressure lines in a sequence controllable by means of valves (5, 6), wherein a single common pressure source (D) is provided for the two pressure levels, **characterised in that**, for the lower pressure level, the quantity of blowing medium at the higher pressure level is reduced by means of a throttle (4) inserted into the associated pressure line downstream of the associated valve (5) to such an extent that, owing to the expansion in the longitudinally extended parison (1), the higher second pressure level is reduced to the lower first pressure level, and **in that** the two valves (5, 6) are independent of one another from the point of view of control engineering.

3. A device according to claim 2, **characterised in that** the throttle (4) is adjustable.

4. A device according to claim 2 or 3, **characterised in that** the valves (5, 6) for controlling the sequence of the pressure levels of the blowing medium are formed by pressure-balanced, fast-acting, 2/2 directional seat valves.

5. A device according to one or more of claims 2 to 4, **characterised in that** the valves (5, 6), and preferably also the throttle (4), together with all the connecting lines are arranged in a common housing (7), preferably in the immediate vicinity of the blowing mould (2).

## Revendications

1. Procédé pour produire des récipients creux en matière plastique, en particulier des bouteilles en polyéthylène, dans lequel on pose une ébauche préformée (1) dans un moule de soufflage (2) et on l'allonge tout d'abord longitudinalement au moyen d'une lance mobile en introduisant un fluide de soufflage gazeux à un premier niveau de pression faible, suite à quoi on termine le moulage du récipient en introduisant un fluide de soufflage gazeux à un deuxième niveau de pression plus élevé, le fluide de soufflage au premier niveau de pression étant prélevé dans la même source de pression (D) que le fluide de soufflage au deuxième niveau de pression, **caractérisé en ce que** l'on réduit la quantité de fluide de soufflage à niveau de pression plus élevé par étranglement pour obtenir le niveau de pression faible, aussi loin que l'on réduise le deuxième niveau de pression plus élevé pour passer au premier niveau de pression plus faible par expansion dans l'ébauche allongée longitudinalement (1), et **en ce que** l'on peut régler l'amenée du fluide de soufflage des deux niveaux de pression indépendamment l'un de l'autre dans le temps et par des techniques de commande indépendantes, et la réduction du niveau de pression plus élevé pour passer au niveau de pression plus faible s'effectue après libération de l'amenée du fluide de soufflage.

2. Dispositif pour produire des récipients creux en matière plastique, en particulier des bouteilles en polyéthylène, comportant un moule de soufflage (2) et une lance (3) qui est mobile longitudinalement dans celui-ci et qui peut être reliée à un fluide de soufflage gazeux à deux niveaux de pression différents via des conduites sous pression dans une succession commandée au moyen de valves (5, 6), une seule source de pression commune (D) étant prévue pour les deux niveaux de pression, **caractérisé en ce que** l'on réduit la quantité de fluide de soufflage à niveau de pression plus élevé par étranglement pour obtenir le niveau de pression faible au moyen d'un étranglement (4) intégré dans la conduite sous pression associée en arrière de la valve associée (5), aussi loin que l'on réduise le deuxième niveau de pression plus élevé pour passer au premier niveau de pression plus faible par expansion dans l'ébauche allongée longitudinalement (1), et **en ce que** les deux valves (5, 6) sont indépendantes l'une de l'autre sur le plan de la commande.

3. Dispositif selon la revendication 2, **caractérisé en ce que** l'étranglement (4) est réglable.

4. Dispositif selon l'une ou l'autre des revendications 2 et 3, **caractérisé en ce que** les valves (5, 6) pour commander la succession des niveaux de pression du fluide de soufflage sont formées par des valves à siège à 2 voies/2 positions équilibrées en pression et à commutation rapide.

5. Dispositif selon l'une ou plusieurs des revendications 2 à 4, **caractérisé en ce que** les valves (5, 6) et de préférence également l'étranglement (4), y compris les conduites de liaison, sont agencés dans un boîtier commun (7), de préférence à proximité immédiate du moule de soufflage (2).
